# EUROPÄISCHE PATENTSCHRIFT

(11) **EP 0 874 224 B1**
(45) Veröffentlichungstag und Bekanntmachung des Hinweises auf die Patenterteilung: **14.01.2004**
(21) Anmeldenummer: 98102961.4
(22) Anmeldetag: 20.02.1998
(51) Int. Cl.: G01D 5/347, G01D 5/36

(54) **Optischer Inkrementgeber**
Optical incremental encoder
Codeur incrémental optique

(30) Priorität: 24.04.1997 DE 19717215
(43) Veröffentlichungstag der Anmeldung: 28.10.1998
(73) Patentinhaber: ROBERT BOSCH GMBH, 70442 Stuttgart (DE)
(72) Erfinder: Heumann, Helge, 31141 Hildesheim (DE)

(56) Entgegenhaltungen:
- EP-A- 0 292 151
- US-A- 4 201 911
- US-A- 4 555 625
- US-A- 4 691 101
- US-A- 4 833 316

## Beschreibung

### Stand der Technik

Die Erfindung geht von einem optischen Inkrementgeber nach der Gattung des Hauptanspruchs aus.

Aus einem Prospekt der Fa. Lorlin Electronics sind bereits die optischen Inkrementgeber LOE1 und LOE8 bekannt, die ein Inkrementrad aufweisen, der verschiedene Schaltpositionen einnehmen kann. Dabei sind mindestens zwei Leuchtdioden und zugehörige Lichtempfänger vorgesehen, wobei die Lichtempfänger bei Betätigung des Inkrementrads Signalimpulsfolgen abgeben, die je nach Drehrichtung um 90° phasenverschoben sind.

Aus der US 4,555,625 ist eine Schaltung mit einer Codiertrommel bekannt, bei der zwei Lichtempfängern jeweils ein Satz von Durchbrüchen in der Codiertrommel zugeordnet ist. Eine Erfassung einer Stellung der Trommel wird dabei dadurch erreicht, dass Lichtstrahlen, die von Lichtquellen innerhalb der Codiertrommel austreten, durch die unterschiedlichen Durchbrüche von den jeweils zugeordneten Lichtempfängern erfasst werden.

### Vorteile der Erfindung

Der erfindungsgemäße optische Inkrementgeber mit den Merkmalen des Hauptanspruchs hat demgegenüber den Vorteil, dass nur eine einzige Lichtquelle benötigt wird, so dass Platz, Material und Kosten eingespart werden.

Ein weiterer Vorteil besteht darin, dass die Lichtquelle mehrere Aufgaben gleichzeitig erfüllen kann, indem sie einerseits die Detektion einer Drehbewegung des Inkrementrads und andererseits die Beleuchtung des Inkrementrads ermöglicht. Auch dadurch werden Platz, Material und Kosten eingespart.

Weiterhin ist es vorteilhaft, daß die Signalimpulsfolge mechanisch durch abwechselnde Lichtzufuhr über die Durchbrüche und Lichtunterbrechung durch den Abstand zwischen benachbarten Durchbrüchen allein aufgrund einer Drehbewegung des Inkrementrads bewirkt wird. Auf diese Weise ist eine besonders verschleißarme, einfach herstellbare und wenig Kosten verursachende Realisierung des erfindungsgemäßen optischen Inkrementgebers möglich.

Durch die in den Unteransprüchen aufgeführten Maßnahmen sind vorteilhafte Weiterbildungen und Verbesserungen des im Hauptanspruch angegebenen optischen Inkrementgebers möglich.

Besonders vorteilhaft ist es, daß das Inkrementrad auf einer Schalterplatte aufliegt und in einer Gehäusekappe geführt ist. Auf diese Weise besteht nur ein sehr geringer Montageaufwand, wobei gleichzeitig eine hohe Kraftaufnahme durch die Schalterplatte möglich ist, so daß das Risiko einer Beschädigung gering ist. Durch die Führung in der Gehäusekappe kann das Inkrementrad nicht verloren gehen.

Ein weiterer Vorteil besteht darin, daß der Grundaufbau des optischen Inkrementgebers unabhängig von dem für die Installation des optischen Inkrementgebers vorgesehenen Gerät ist, so daß der Herstellungsaufwand und damit verbundene Kosten reduziert werden und für eine Unterscheidung der Geräte nur das Design des Inkrementrads verändert werden muß.

Durch die Führung des Inkrementrads in der Gehäusekappe ergibt sich außerdem der Vorteil, daß kein Toleranzausgleich zur Schalterplatte bzw. zum Gehäuse erforderlich ist, daß nur ein minimales axiales und radiales Spiel des Inkrementrads möglich ist und daß das Inkrementrad immer zentrisch läuft.

Vorteilhaft ist es weiterhin, daß die Durchbrüche in einem durch die Gehäusekappe verdeckten Teil der Außenwand des Inkrementrads angeordnet sind. Auf diese Weise werden die Lichtempfänger nicht durch Außenlicht beeinflußt.

Ein weiterer Vorteil besteht darin, daß die Lichtempfänger auf das Zentrum der Lichtquelle ausgerichtet sind und eine kurze Ansprechzeit aufweisen. Dies ermöglicht den bestmöglichen Empfang des von der Lichtquelle ausgestrahlten Lichtes und eine Detektion der einzelnen Durchbrüche durch die Lichtempfänger auch bei schneller Drehung des Inkrementrads.

Ein weiterer Vorteil ergibt sich dadurch, daß die Abmessungen der Durchbrüche in der jeweiligen Drehrichtung des Inkrementrads im wesentlichen gleich sind und daß die Abmessungen der Abstände zwischen den einzelnen Durchbrüchen im wesentlichen gleich sind. Auf diese Weise läßt sich die Herstellung des Inkrementrads weiter vereinfachen.

Besonders vorteilhaft ist es, daß die Lichtempfänger in jeweils einem Schlitz der Gehäusekappe angeordnet sind, dem im wesentlichen nur über die Durchbrüche des Inkrementrads Licht zuführbar ist. Auf diese Weise wird ebenfalls verhindert, daß die Lichtempfänger Außenlichteinflüssen ausgesetzt sind.

Ein weiterer Vorteil besteht darin, daß das Inkrementrad an seiner Außenwand einen Zahnkranz aufweist, in den eine in der Gehäusekappe angeordnete federnde Rast einrastbar ist. Auf diese Weise wird der Bedienkomfort für den Benutzer erhöht, da er die Anzahl der von ihm gewünschten Inkrementierungsvorgänge genau einstellen kann.

Ein weiterer Vorteil besteht darin, daß das Inkrementrad nur durch entsprechenden Krafteinsatz betätigt werden kann, so daß es unempfindlich gegen Vibrationen ist, die ansonsten zu ungewollten Inkrementierungsvorgängen durch unkontrollierte Bewegung des Inkrementrads führen könnten.

Besonders vorteilhaft ist es, daß die Ausgangssignale der Lichtempfänger einem Schwellwertentscheider zugeführt sind und daß die durch den Schwellwertentscheider erzeugten Impulsfolgen einer Auswerteeinheit zugeführt sind. Auf diese Weise läßt sich das von den Lichtempfängern jeweils abgegebene Signal auf einfache Weise binarisieren, so daß eine digitale Weiterverarbeitung ermöglicht wird.

Ein weiterer Vorteil besteht darin, daß das Inkrementrad außerhalb des Bereichs der Durchbrüche aus lichtdurchlässigem Material und im Bereich der Durchbrüche aus lichtundurchlässigem Material hergestellt ist. Auf diese Weise kann das Inkrementrad durch die Lichtquelle beleuchtet werden, ohne daß den Lichtempfängern zwischen zwei benachbarten Durchbrüchen Licht von der Lichtquelle zugeführt und dadurch eine Beeinflussung der von den Lichtempfängern abgegebenen Signalimpulsfolge ermöglicht wird.

### Zeichnung

Ein Ausführungsbeispiel der Erfindung ist in der Zeichnung dargestellt und in der nachfolgenden Beschreibung näher erläutert. Es zeigen Figur 1 eine räumliche Darstellung eines erfindungsgemäßen optischen Inkrementgebers, Figur 2 einen erfindungsgemäßen optischen Inkrementgeber, dessen Inkrementrad mit einem Zahnkranz zur Arretierung durch eine federnde Rast versehen ist, Figur 3 eine Folge von Drehpositionen des Inkrementrads des erfindungsgemäßen optischen Inkrementgebers, Figur 4 die Ausgangssignale zweier Lichtempfänger des erfindungsgemäßen optischen Inkrementgebers vor und nach einer Schwellwertentscheidung, Figur 5 ein Blockschaltbild für die Detektion einer Drehbewegung des Inkrementrads und Figur 6 einen Ablaufplan zur Beschreibung der Funktionsweise der Detektion einer Drehbewegung des Inkrementrads.

### Beschreibung des Ausführungsbeispiels

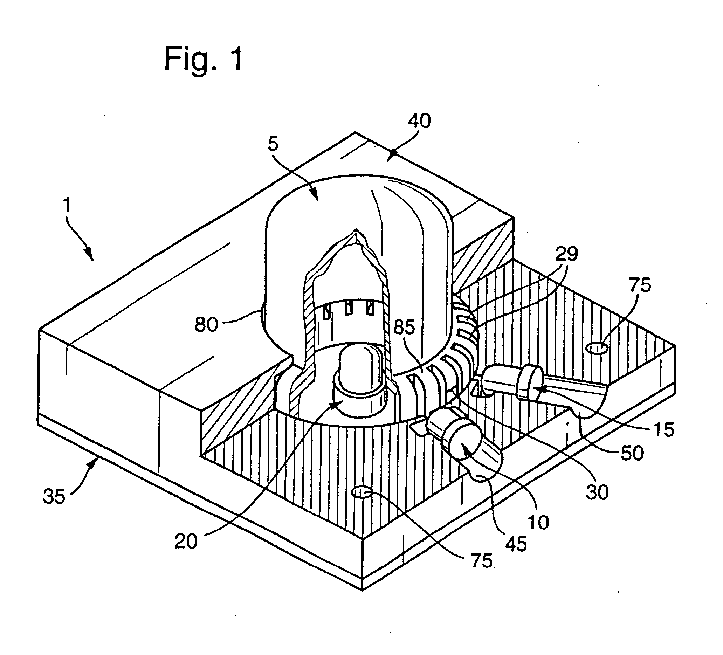

In Figur 1 kennzeichnet 1 einen optischen Inkrementgeber, wie er beispielsweise in das Gehäuse eines elektrischen Gerätes, beispielsweise eines Autoradios integriert sein kann. Der optische Inkrementgeber 1 umfaßt eine Schalterplatte 35 auf der über Schraublöcher 75 eine Gehäusekappe 40 montiert ist. In einer abgestuften kreisscheibenförmigen Aussparung 80 der Gehäusekappe 40 ist ein als Drehregler ausgebildetes Inkrementrad 5 angeordnet. Dabei ist der Durchmesser der Aussparung 80 auf der der Schalterplatte 35 zugewandten Seite der Gehäusekappe 40 größer als auf der der Schalterplatte 35 abgewandten Seite der Gehäusekappe 40. Der Drehregler 5 ist hohlzylinderförmig ausgebildet und drehbar in der Aussparung 80 geführt. Der Durchmesser der Grundfläche des Drehreglers 5 ist dabei zur Schalterplatte 35 hin vergrößert, so daß sich dort eine Wulst 85 bildet, die auf der Schalterplatte 35 aufliegt und von der abgestuften Aussparung 80 nach außen hin arretiert wird, so daß der Drehregler 5 vor Herausfallen gesichert ist. Die Kraftaufnahme bei Betätigung des Drehreglers 5 erfolgt über die Schalterplatte 35. Die Wulst 85 ist vollständig von der Gehäusekappe 40 verdeckt, wie es dem Ausschnitt gemäß Figur 1 zu entnehmen ist. In der Wulst 85 sind Durchbrüche 29 mit jeweils im wesentlichen gleichen Abmessungen vor allem in der jeweiligen Drehrichtung des Drehreglers 5 vorgesehen. Dabei sind die Durchbrüche 29 in Drehrichtung jeweils durch einen Abstand 30 voneinander beabstandet, wobei die Abstände 30 zwischen den einzelnen Durchbrüchen 29 im wesentlichen gleich sind.
Der Abstand 30 zweier benachbarter Durchbrüche 25,...,29, 31 ist mindestens so groß gewählt, dass die Lichtzuführung von der Lichtquelle 20 zu den Lichtempfängern 10, 15 unterbrechbar ist. Innerhalb des Drehreglers 5 ist eine als Leuchtdiode ausgebildete Lichtquelle 20 auf der Schalterplatte 35 etwa mittig montiert. Außerhalb des Drehreglers 5 weist die Gehäusekappe 40 einen ersten Schlitz 45 und einen zweiten Schlitz 50 auf. Im ersten Schlitz 45 ist ein erster als Photodiode ausgebildeter Lichtempfänger 10, und im zweiten Schlitz 50 ist ein ebenfalls als Photodiode ausgebildeter zweiter Lichtempfänger 15 angeordnet. Dabei sind die Photodioden 10, 15 auf das Zentrum der Leuchtdiode 20 ausgerichtet und weisen eine kurze Ansprechzeit auf. Die beiden Photodioden 10, 15 sind dabei auf der gleichen Seite der Gehäusekappe 40 angeordnet und so voneinander beabstandet, daß sie nicht gleichzeitig ein Helligkeitsmaximum des ihnen über die Durchbrüche 29 zugeführten Lichts der Lichtquelle 20 detektieren. Die Schlitze 45, 50 befinden sich vollständig innerhalb der Gehäusekappe 40, so daß sie keinen Außenlichteinflüssen ausgesetzt sind und nur das von der Leuchtdiode 20 abgestrahlte Licht detektieren können. Der Drehregler 5 ist außerhalb des Bereichs der Durchbrüche 29, d. h. in seinem nicht durch die Gehäusekappe 40 verdeckten Bereich aus lichtdurchlässigem Material und im Bereich der Durchbrüche 29 aus lichtundurchlässigem Material hergestellt. Auf diese Weise kann durch die Leuchtdiode 20 der Drehregler 5 beleuchtet werden, ohne daß das Licht der Lichtquelle 20 auf anderem Wege als über die Durchbrüche 29 zu den Photodioden 10, 15 gelangt. Dazu ist natürlich auch die Gehäusekappe 40 aus lichtundurchlässigem Material herzustellen.

Aufgrund einer Anordnung der Photodioden 10, 15 in unmittelbarer Nähe des Drehreglers 5 und entsprechend gewählter Abmessungen der Durchbrüche 29 ist den Photodioden 10, 15 jeweils über höchstens einen der Durchbrüche 29 Licht zuführbar. Dies wird auch dadurch erreicht, daß der Abstand 30 zwischen zwei jeweils benachbarten Durchbrüchen 29 mindestens so groß gewählt ist, daß die Lichtzuführung von der Leuchtdiode 20 für die Photodioden 10, 15 unterbrechbar ist.

Den beiden Schlitzen 45, 50 der Gehäusekappe 40 ist im wesentlichen nur über die Durchbrüche 29 Licht zuführbar.

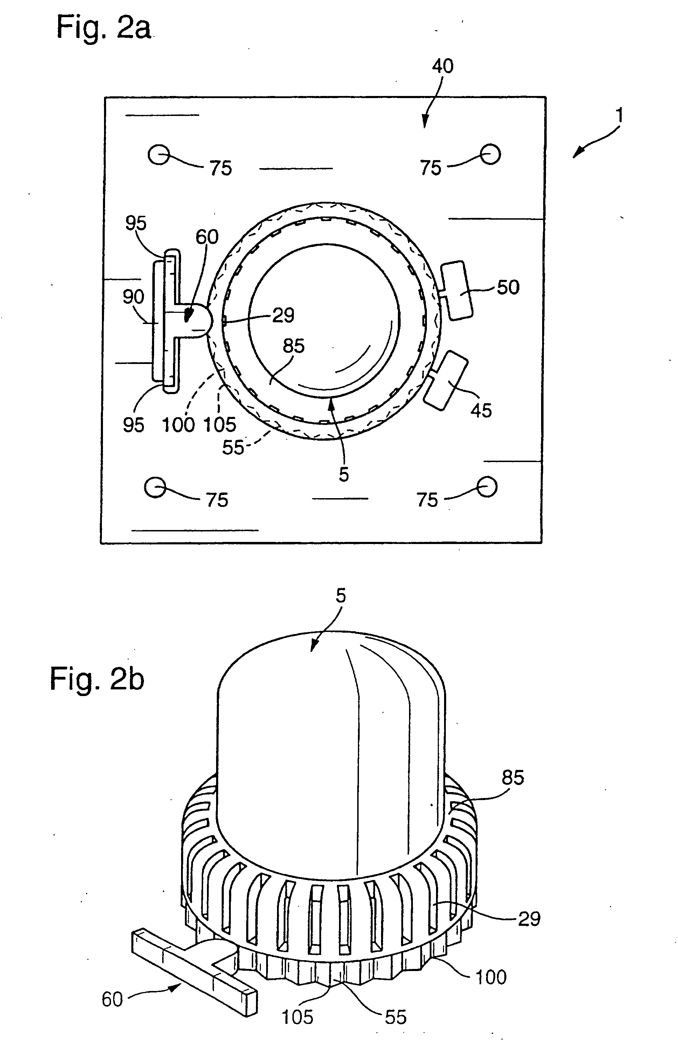

In Figur 2a) ist der optische Inkrementgeber 1 in einer Aufsicht dargestellt. Dabei ist auf der den Schlitzen 45, 50 gegenüberliegenden Seite des Drehreglers 5 eine Aushöhlung 90 in der Gehäusekappe 40 vorgesehen, in der eine federnde Rast 60 an Auflagekanten 95 der Aushöhlung 90 gelagert ist. Weiterhin ist, wie auch Figur 2b) entnommen werden kann, auf der der Schalterplatte 35 zugewandten Seite der Wulst 85 ein nach außen gerichteter Zahnkranz 55 an der Außenwand des Drehreglers 5 vorgesehen, über den die Wulst 85 auf der Schalterplatte 35 aufliegt. Dabei bildet der Zahnkranz 55 bei jedem Durchbruch 29 eine Nut 100, in der die federnde Rast 60 einrasten kann. Auf diese Weise kann der Drehregler 5 bei jedem Durchbruch 29 einrasten. Bei einer Drehung des Drehreglers 5 wird die federnde Rast 60 abwechselnd durch einen Zahn 105 des Zahnkranzes 55 in die Aushöhlung 90 gedrückt und federt aufgrund ihrer Auflage an den Auflagekanten 95 der Aushöhlung 90 in die nächste Nut 100 zurück.

Durch Verwendung der federnden Rast 60 und des Zahnkranzes 55 wird verhindert, daß sich der Drehregler 5 bereits durch leichte Vibrationen oder Erschütterungen ungewollt in Drehung versetzt. Nur bei entsprechendem Kraftaufwand seitens des Benutzers läßt sich somit der Drehregler 5 kontrolliert drehen.

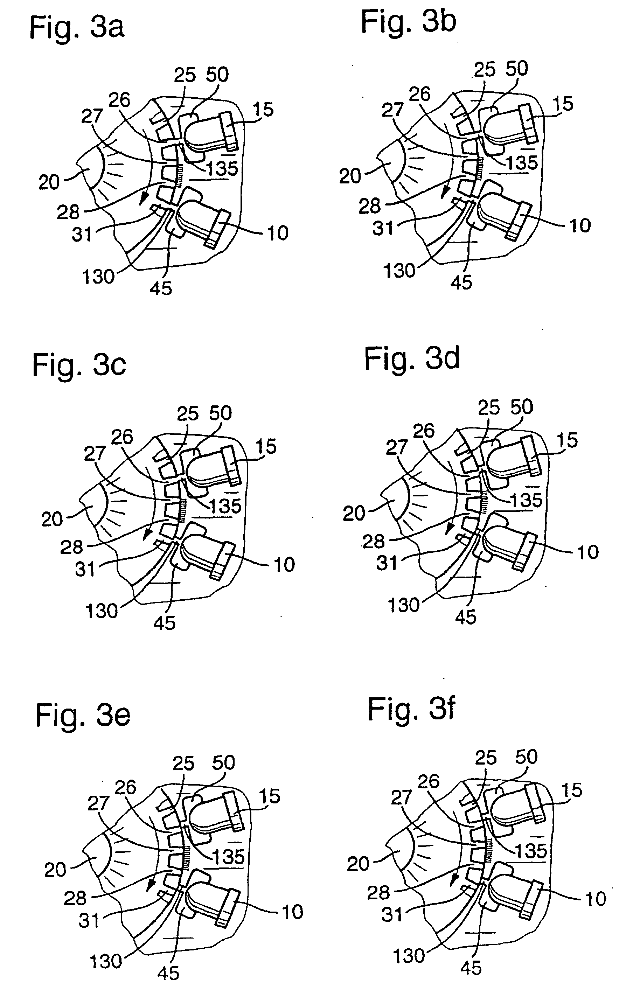

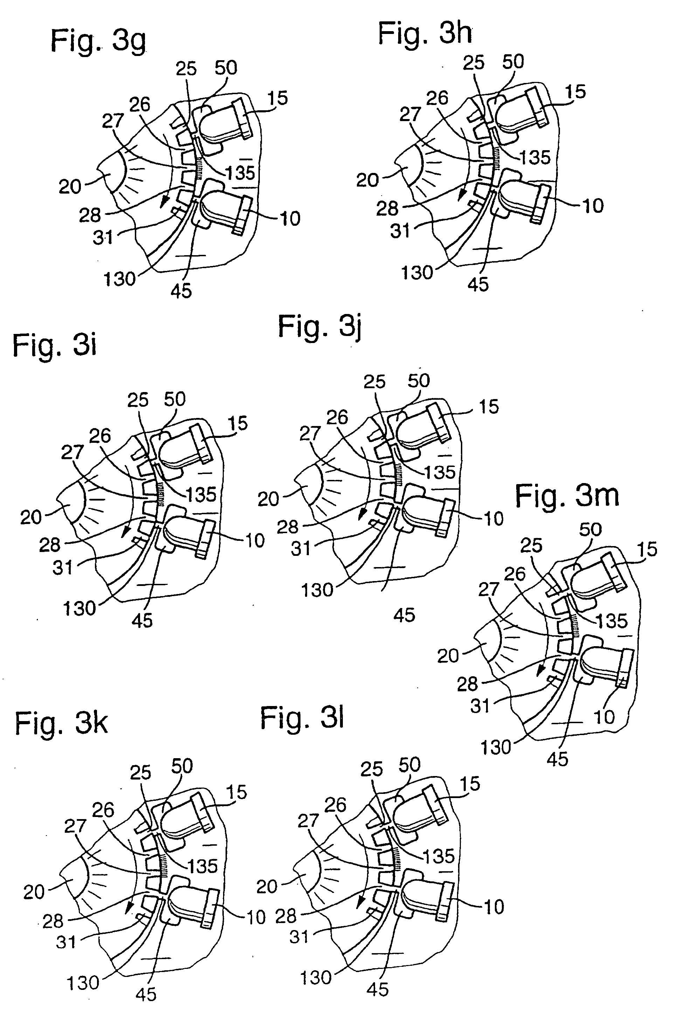

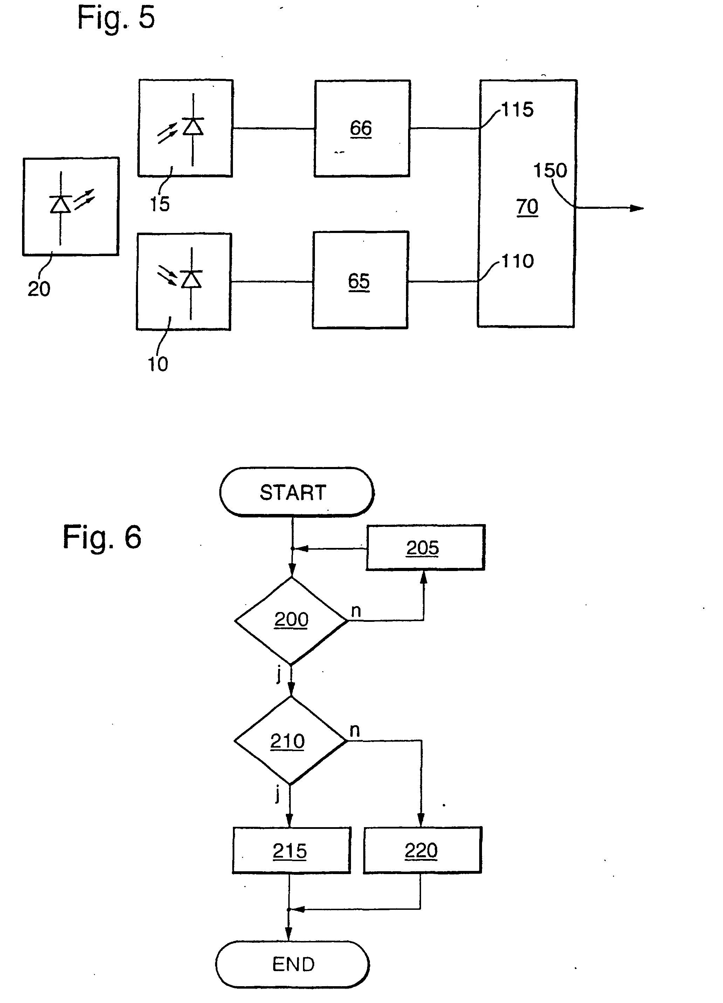

Über den Drehregler 5 werden beispielsweise Bedienfunktionen eines elektrischen Gerätes, wie z. B. die Lautstärke bei einem Autoradio eingestellt. Die Funktionsweise des optischen Inkrementgebers 1 zur Realisierung einer solchen Einstellung ist in Figur 3 dargestellt. Dabei kennzeichnen in den Figuren 1, 2, 3, 4, 5 und 6 gleiche Bezugszeichen jeweils gleiche Elemente. In Figur 5 ist ein Blockschaltbild für die Detektion einer Drehbewegung des Drehreglers 5 dargestellt. Dabei sendet die Leuchtdiode 20 Licht aus, das von den Photodioden 10, 15 empfangen wird. Die erste Photodiode 10 ist über einen ersten Schwellwertentscheider 65 mit einem ersten Eingang 110 einer Auswerteeinheit 70 verbunden. Die zweite Photodiode 15 ist über einen zweiten Schwellwertentscheider 66 mit einem zweiten Eingang 115 der Auswerteschaltung 70 verbunden.

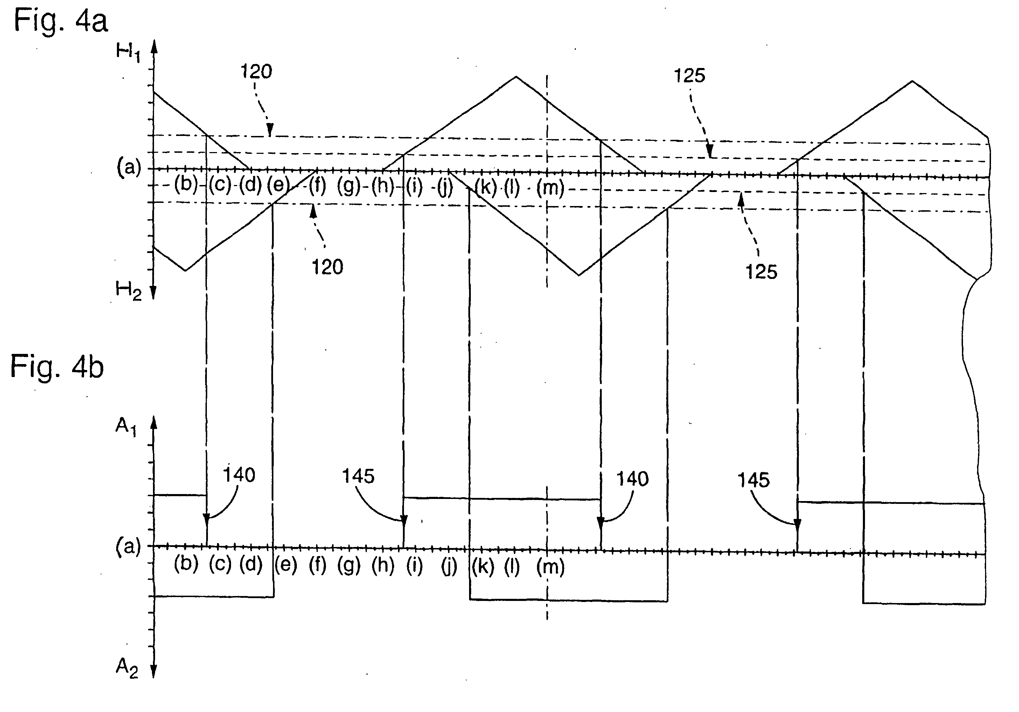

In Figur 4a ist in Abhängigkeit einer Schalterstellung s des Drehreglers 5 eine von der ersten Photodiode 10 detektierte Helligkeit H₁ und eine von der zweiten Photodiode 15 detektierte Helligkeit H₂ in einem einzigen Diagramm aufgetragen. In Figur 4b) ist über der Schalterstellung s die Amplitude A₁ des entsprechenden Ausgangssignals des ersten Schwellwertentscheiders 65 und die Amplitude A₂ des entsprechenden Ausgangssignals des zweiten Schwellwertentscheiders 66 ebenfalls in einem einzigen Diagramm aufgetragen. Dabei ist gemäß Figur 4 a) eine erste Schaltschwelle 120 für das Ausschalten eines Impulses und eine zweite Schaltschwelle 125 für das Einschalten eines Impulses durch den jeweiligen Schwellwertentscheider 65, 66 dargestellt. Der erste Schwellwert 120 ist dabei betragsmäßig größer als der zweite Schwellwert 125. Gemäß Figur 3 sind 13 verschiedene Positionen des Drehreglers 5 bei einer Drehung im Uhrzeigersinn dargestellt. Die Figuren 3a) bis 3m) stellen dabei jeweils eine Schalterstellung bei einer Drehung des Drehreglers 5 im Uhrzeigersinn dar. Dabei sind jeweils 5 Durchbrüche 29 dargestellt, die zur besseren Unterscheidung im folgenden als erster Durchbruch 25, als zweiter Durchbruch 26, als dritter Durchbruch 27, als vierter Durchbruch 28 und als fünfter Durchbruch 31 gekennzeichnet sind. Gemäß Figur 3a wird die erste Photodiode 10 über den fünften Durchbruch 31 und die zweite Photodiode 15 über den zweiten Durchbruch 26 von der Leuchtdiode 20 beleuchtet. Dabei überdeckt sich die eine erste der Leuchtdiode 20 zugewandte Öffnung 130 des ersten Spalts 45 nicht vollständig mit dem fünften Durchbruch 31. Auch eine zweite der Leuchtdiode 20 zugewandte Öffnung 135 des zweiten Spalts 50 überdeckt nicht vollständig den zweiten Durchbruch 26. Somit detektiert weder die erste Photodiode 10 noch die zweite Photodiode 15 in der Schalterstellung gemäß Figur 3a) ein Helligkeitsmaximum. Gemäß Figur 3 wird der Drehregler 5 im Uhrzeigersinn gedreht, so daß gemäß Figur 3b) eine vollständige Überlappung der zweiten Öffnung 135 mit dem zweiten Durchbruch 26 erzielt wird und somit die zweite Photodiode 15 ein Helligkeitsmaximum detektiert. Im Gegensatz dazu verringert sich die Überlappung der ersten Öffnung 130 mit dem fünften Durchbruch 31, so daß die detektierte Helligkeit bei der ersten Photodiode 10 weiter abnimmt. Der jeweils detektierte Helligkeitsverlauf ist dabei Figur 4a) zu entnehmen. Aufgrund der gemäß Figur 3 gewählten Abmessungen der ersten Öffnung 130 und der zweiten Öffnung 135 im Verhältnis zu den Abmessungen der Durchbrüche 25, 26, 27, 28, 31 ergibt sich in Abhängigkeit der Schalterstellung s ein linearer Verlauf der von den Photodioden 10, 15 detektierten Helligkeit. Dies findet seine Ursache darin, daß die Abmessung der Öffnungen 130, 135 bezüglich der Drehrichtung und die entsprechenden Abmessungen der Durchbrüche 25, 26, 27, 28, 31 gleich sind. Die Schalterstellungen sind äquidistant voneinander beabstandet, was ebenfalls Voraussetzung für den linearen Verlauf der von der ersten Photodiode 10 bzw. der zweiten Photodiode 15 detektierten Helligkeit H₁ bzw. H₂ gemäß Figur 4a)ist. So nimmt beim Weiterdrehen im Uhrzeigersinn gemäß Figur 3c) die von der zweiten Photodiode 15 detektierte Helligkeit wieder ab, genauso wie die von der ersten Photodiode 10 detektierte Helligkeit. Dies setzt sich gemäß Figur 3d) dahingehend fort, daß von der ersten Photodiode 10 gar kein Licht mehr empfangen wird. Da die Abstände 30 zwischen den Durchbrüchen 25, 26, 27, 28, 31 bezüglich der Drehrichtung größer gewählt sind als die entsprechende Abmessung der ersten Öffnung 130 und der zweiten Öffnung 135, bleibt die detektierte Helligkeit gemäß Figur 3e) bei der ersten Photodiode 10 beim Weiterdrehen im Uhrzeigersinn weiterhin Null. Bei der Schalterstellung des Drehreglers 5 gemäß Figur 3f) ist sowohl die von der ersten Photodiode 10 als auch die von der zweiten Photodiode 15 detektierte Helligkeit Null, da weder die erste Öffnung 130 noch die zweite Öffnung 135 mit einem Durchbruch 25,..., 28, 31 überlappt. Dasselbe gilt für die nächste Schalterstellung gemäß Figur 3g) und die übernächste Schalterstellung gemäß Figur 3h). Erst bei der Schalterstellung gemäß Figur 3i) detektiert die erste Photodiode 10 wieder Helligkeit, da die erste Öffnung 130 nun mit dem vierten Durchbruch 28 teilweise überlappt. Die zweite Photodiode 15 detektiert nach wie vor keine Helligkeit. Dasselbe gilt für die zweite Photodiode 15 bei der Schalterstellung gemäß Figur 3j), wohingegen die erste Photodiode 10 nun noch mehr Helligkeit detektiert, da die erste Öffnung 130 noch stärker mit dem vierten Durchbruch 28 überlappt. Diese Überlappung wird bei der Schalterstellung gemäß Figur 3k) noch vergrößert, so daß die erste Photodiode 10 noch mehr Helligkeit detektiert. Da die zweite Öffnung 135 nun mit dem ersten Durchbruch 25 teilweise überlappt, detektiert auch die erste Photodiode 15 wieder Helligkeit. Bei der Schalterstellung gemäß Figur 3e) überlappt der vierte Durchbruch 28 vollständig mit der ersten Öffnung 130, so daß die erste Photodiode ein Helligkeitsmaximum detektiert. Auch die von der zweiten Photodiode 15 detektierte Helligkeit nimmt zu, da die Überlappung der zweiten Öffnung 135 mit dem ersten Durchbruch 25 zunimmt. Da bei der Schalterstellung gemäß Figur 3m) die Überlappung zwischen der zweiten Öffnung 135 und dem ersten Durchbruch 25 weiter vergrößert wird, detektiert die zweite Photodiode 15 auch mehr Helligkeit bei dieser Schalterstellung. Die erste Photodiode 10 hingegen detektiert nun wieder weniger Helligkeit, da die Überlappung zwischen der ersten Öffnung 130 und dem vierten Durchbruch 28 wieder abnimmt. Dabei ist gemäß Figur 3m) eine Schalterstellung erreicht, die gegenüber der Schalterstellung gemäß Figur 3a) um genau einen Durchbruch verschoben ist, so daß bei einem Weiterdrehen des Drehreglers 5 im Uhrzeigersinn eine periodische Fortsetzung des geschilderten Helligkeitsverlaufs für die erste Photodiode 10 und die zweite Photodiode 15 erfolgt. Diese periodische Fortsetzung ist in Figur 4a) dargestellt. Die Photodioden 10, 15 liefern nun an die Schwellwertentscheider 65, 66 elektrische Signale, die proportional zum Helligkeitsverlauf H₁, H₂ gemäß Figur 4a) sind. Solange bei abnehmender detektierter Helligkeit die erste Schaltschwelle 120 nicht unterschritten wird, gibt der entsprechende Schwellwertentscheider 65, 66 einen Impuls an die Auswerteeinheit 70 ab. Liegt bei abnehmender detektierter Helligkeit H₁, H₂ die Helligkeit unterhalb der ersten Schaltschwelle 120, so gibt der entsprechende Schwellwertentscheider 65, 66 kein Signal an die Auswerteeinheit 70 weiter. Wird bei ansteigender Helligkeit H₁, H₂ die zweite Schaltschwelle 125 überschritten, so gibt der entsprechende Schwellwertentscheider 65, 66 wieder einen Impuls an die Auswerteeinheit 70 ab.

Gemäß Figur 4a) wird die erste Schaltschwelle 120 von der ersten Photodiode 10 zwischen der Schalterstellung gemäß Figur 3b) und Figur 3c) unterschritten, so daß gemäß Figur 4b) der entsprechende Ausgangsimpuls des ersten Schwellwertentscheiders 65 mit der Amplitude A₁ auf Null zurückgeht. Die von dem zweiten Photodetektor 15 detektierte Helligkeit H₂ unterschreitet die erste Schaltschwelle 120 zwischen der Schalterstellung gemäß Figur 3d) und Figur 3e), so daß zwischen diesen beiden Schalterstellungen auch der Impuls der Amplitude A₂ am Ausgang des zweiten Schwellwertentscheiders 66 auf Null zurückgeht. Zwischen der Schalterstellung gemäß Figur 3h) und Figur 3i) überschreitet die von der ersten Photodiode 10 detektierte Helligkeit H₁ die zweite Schaltschwelle 125, so daß zwischen diesen beiden Schalterstellungen vom ersten Schwellwertentscheider 65 wieder ein Impuls der Amplitude A₁ an die Auswerteeinheit 70 abgegeben wird. Zwischen der Schalterstellung gemäß Figur 3j) und Figur 3k) überschreitet auch die von der zweiten Photodiode 15 detektierte Helligkeit H₂ die zweite Schaltschwelle 125, so daß zwischen diesen beiden Schalterstellungen auch der zweite Schwellwertentscheider 66 wieder einen Impuls der Amplitude A₂ an die Auswerteeinheit 70 abgibt. Dabei gibt der jeweilige Schwellwertentscheider 65, 66 so lange einen Impuls an die Auswerteeinheit 70 ab, solange die entsprechende Helligkeit H₁, H₂ oberhalb der ersten Schaltschwelle 120 liegt. Der jeweilige Schwellwertentscheider 65, 66 gibt andererseits so lange keinen Impuls an die Auswerteeinheit 70 ab, solange die zweite Schaltschwelle 125 nicht überschritten wurde.

Die Schwellwertentscheidung mittels der Schwellwertentscheider 65, 66 bzw. die Digitalisierung des dem an der ersten Photodiode 10 bzw. an der zweiten Photodiode 15 detektierten Helligkeitsverlaufs proportionalen elektrischen Ausgangssignals der ersten Photodiode 10 bzw. der zweiten Photodiode 15 kann beispielsweise durch einen Schmitt-Trigger mit geeigneter Hysterese realisiert werden. Über die Variation der beiden Schaltschwellen 120, 125 kann man die Dauer der jeweiligen Schaltzustände bzw. der von den Schwellwertentscheidern 65, 66 erzeugten Impulse beeinflussen.

Die Zahl der Nuten 100 des Zahnkranzes 55 entspricht der Zahl der Durchbrüche 29, so daß der Drehregler 5 immer nur um ein ganzzahliges Vielfaches einer gemäß den Figuren 3a) bis 3m) dargestellten Periodenlänge eingestellt werden kann. Die Anzahl der bei einer Drehbewegung des Drehreglers 5 detektierbaren fallenden Flanken des Ausgangssignals des ersten Schwellwertentscheiders 65 bzw. des zweiten Schwellwertentscheiders 66 entspricht dabei der Anzahl der bei dieser Drehbewegung zurückgelegten Periodenlängen und damit der Anzahl der von den Lichtempfängern bei dieser Drehbewegung detektierten Durchbrüche. Dabei führt jeder detektierte Durchbruch zu einem Inkrementiervorgang der durch den Drehregler 5 einzustellenden Bedienfunktion des zugehörigen elektrischen Gerätes. Dabei hängt es von der Drehrichtung ab, in welcher Richtung die Einstellung der entsprechenden Bedienfunktion geändert wird. So kann beispielsweise eine Drehung des Drehreglers 5 im Uhrzeigersinn zu einer Erhöhung der Lautstärke eines Autoradios und eine Drehung des Drehreglers 5 gegen den Uhrzeigersinn zu einer Senkung der Lautstärke des Autoradios führen. In der Auswerteeinheit 70 werden sowohl die Anzahl der Inkrementierungsschritte, das heißt der von einer der beiden Photodioden 10, 15 bewirkten fallenden Flanken, als auch die Drehrichtung des Drehreglers 5 ermittelt, so daß die entsprechend zugehörige Bedienfunktion richtig eingestellt werden kann. Der von einem Ausgang 150 der Auswerteeinheit 70 weg weisende Pfeil gemäß Figur 5 deutet die Abgabe eines entsprechenden Signals von der Auswerteeinheit 70 an, um die entsprechende Bedienfunktion einzustellen.

Gemäß Figur 6 ist ein Ablaufplan dargestellt, der die Detektion der Drehbewegung des Drehreglers 5 in der Auswerteeinheit 70 beschreibt. Das in Figur 6 dargestellte Programm wird dabei für jeden einzelnen Inkrementierungsvorgang erneut durchlaufen. Bei einem Programmpunkt 200 wird geprüft, ob das Ausgangssignal A₁ des ersten Schwellwertentscheiders 65 eine fallende Flanke 140, 145 gemäß Figur 4 aufweist. Ist dies der Fall, so wird zu Programmpunkt 210 verzweigt, andernfalls wird zu Programmpunkt 205 verzweigt. Bei Programmpunkt 205 wird eine Warteschleife durchlaufen, und anschließend wird wieder zu Programmpunkt 200 verzweigt. Bei Programmpunkt 210 wird geprüft, ob bei der detektierten fallenden Flanke 140, 145 das Ausgangssignal A₂ des zweiten schwellwertentscheiders 66 eingeschaltet ist, d. h. ob dort bei der fallenden Flanke 140, 145 ein Impuls vorliegt. Ist dies der Fall, so wird zu Programmpunkt 215 verzweigt, andernfalls wird zu Programmpunkt 220 verzweigt. Bei Programmpunkt 215 ist eine Drehbewegung des Drehreglers 5 im Uhrzeigersinn detektiert worden, so daß bei diesem Programmpunkt eine Inkrementierung der Einstellung der entsprechenden Bedienfunktion erfolgt. Handelt es sich bei der einzustellenden Bedienfunktion um die Lautstärke des Autoradios, so wird diese bei Programmpunkt 215 erhöht. Gemäß Figur 4 wird eine fallende Flanke des Ausganssignals A₁ des ersten Schwellwertentscheiders 65 mit dem Bezugszeichen 140 gekennzeichnet, wenn bei dieser fallenden Flanke das Ausganssignal A₂ des zweiten Schwellwertentscheiders 66 eingeschaltet ist, bzw. an dessen Ausgang ein Impuls vorliegt. Bei einer Drehbewegung des Drehreglers 5 im Uhrzeigersinn werden die Diagramme gemäß Figur 4a) und gemäß Figur 4b) jeweils von links nach rechts durchlaufen. Bei einer Drehbewegung des Drehreglers 5 gegen den Uhrzeigersinn werden die beiden Diagramme umgekehrt von rechts nach links durchlaufen. Eine abfallende Flanke des Ausgangssignals A₁ des ersten Schwellwertentscheiders 65 fällt dann mit einem ausgeschalteten Ausgangssignal A₂ des zweiten Schwellwertentscheiders 66 zusammen und wird durch das Bezugszeichen 145 gekennzeichnet. Eine solche fallende Flanke 145 bei ausgeschaltetem Ausgangssignal A₂ des zweiten Schwellwertentscheiders 66 wurde bei Programmpunkt 220 detektiert, so daß bei Programmpunkt 220 also eine Drehbewegung des Drehreglers 5 gegen den Uhrzeigersinn detektiert wurde. Dies führt dann zu einer Dekrementierung der Einstellung der entsprechend zugehörigen Bedienfunktion, d. h. im Beispiel der Lautstärke des Autoradios zu einer entsprechenden Verringerung dieser Lautstärke. Nach Programmpunkt 215 bzw. Programmpunkt 220 wird das Programm verlassen.

Alternativ könnte eine Drehbewegung des Drehreglers 5 im Uhrzeigersinn auch zu einer Dekrementierung der Einstellung der entsprechend zugehörigen Bedienfunktion und eine Drehbewegung des Drehreglers 5 gegen den Uhrzeigersinn zu einer Inkrementierung der Einstellung der entsprechenden Bedienfunktion führen.

Die Erkennung der Drehrichtung des Drehreglers 5 ist also nur deshalb detektierbar, weil die Schwellwertentscheider 65, 66 aufgrund der Tatsache, daß die Photodioden 10, 15 nicht bei der gleichen Schalterstellung ein Helligkeitsmaximum detektieren, in Abhängigkeit der Drehrichtung phasenverschoben unterschiedliche Kombinationen von Signalimpulsfolgen A₁, A₂ liefern.

Aufgrund der kurzen Ansprechzeit der Photodioden 10, 15 werden auch schnelle Drehbewegungen des Drehreglers 5 detektiert.

Die Schlitze 45, 50 sind so ausgebildet, daß die Photodioden 10, 15 ebenfalls auf der Schalterplatte 35 montiert werden können. Auch die Schwellwertentscheider 65, 66 und die Auswerteeinheit 70 sowie die Leuchtdiode 20 sind vorteilhafter Weise auf der Schalterplatte 35 montiert.

Statt einer Leuchtdiode können auch andere Lichtquellen 20 verwendet werden, beispielsweise eine Glühbirne oder dergleichen. Als Lichtempfänger 10, 15 kann auch ein Phototransistor oder dergleichen Verwendung finden.

## Patentansprüche

1. Optischer Inkrementgeber (1) mit einem Inkrementrad (5) und Lichtempfängern (10, 15), die in Abhängigkeit der Drehrichtung bei Betätigung des Inkrementrads (5) phasenverschoben Signalimpulse abgeben, wobei innerhalb des Inkrementrads (5) eine Lichtquelle (20), vorzugsweise eine Leuchtdiode, vorgesehen ist, wobei die Außenwand des Inkrementrads (5) eine einzige Reihe von in Drehrichtung des Inkrementrades (5) beabstandeten Durchbrüchen (25,...,29, 31) zur Detektion einer Drehbewegung aufweist, durch die das Licht der Lichtquelle (20) austritt, wobei zwei Lichtempfänger (10, 15), vorzugsweise Photodioden, in unmittelbarer Nähe des Inkrementrads (5) so angeordnet sind, dass ihnen jeweils über höchstens einen der Durchbrüche (25,...,29, 31) Licht zuführbar ist und dass sie nicht gleichzeitig ein Helligkeitsmaximum des ihnen über die Durchbrüche (25,...,29, 31) zugeführten Lichts der Lichtquelle (20) detektieren.

2. Optischer Inkrementgeber (1) nach Anspruch 1, **dadurch gekennzeichnet, daß** das Inkrementrad (5) auf einer Schalterplatte (35) aufliegt und in einer Gehäusekappe (40) geführt ist.

3. Optischer Inkrementgeber (1) nach Anspruch 2, **dadurch gekennzeichnet, daß** die Durchbrüche (25,...,29, 31) in einem durch die Gehäusekappe (40) verdeckten Teil der Außenwand des Inkrementrads (5) angeordnet sind.

4. Optischer Inkrementgeber (1) nach Anspruch 1, 2 oder 3, **dadurch gekennzeichnet, daß** die Lichtempfänger (10, 15) auf das Zentrum der Lichtquelle (20) ausgerichtet sind und eine kurze Ansprechzeit aufweisen.

5. Optischer Inkrementgeber (1) nach einem der vorherigen Ansprüche, **dadurch gekennzeichnet, daß** die Abmessungen der Durchbrüche (25,...,29, 31) in der jeweiligen Drehrichtung des Inkrementrads (5) im wesentlichen gleich sind.

6. Optischer Inkrementgeber (1) nach einem der vorherigen Ansprüche, **dadurch gekennzeichnet, daß** die Abmessungen der Abstände (30) zwischen den einzelnen Durchbrüchen (25,...,29, 31) im wesentlichen gleich sind.

7. Optischer Inkrementgeber (1) nach einem der Ansprüche 2 bis 6, **dadurch gekennzeichnet, daß** die Lichtempfänger (10, 15) in jeweils einem Schlitz (45, 50) der Gehäusekappe (40) angeordnet sind, dem im wesentlichen nur über die Durchbrüche (25,...,29, 31) des Inkrementrads (5) Licht zuführbar ist.

8. Optischer Inkrementgeber (1) nach einem der Ansprüche 2 bis 7, **dadurch gekennzeichnet, daß** das Inkrementrad (5) an seiner Außenwand einen Zahnkranz (55) aufweist, in den eine in der Gehäusekappe (40) angeordnete federnde Rast (60) einrastbar ist.

9. Optischer Inkrementgeber (1) nach Anspruch 7 oder 8, **dadurch gekennzeichnet, daß** die Lichtempfänger (10, 15) elektrische Signale liefern, die proportional zum Helligkeitsverlauf in Abhängigkeit der Überdeckung des jeweiligen Schlitzes (45, 50) durch einen Durchbruch (25,...,29, 31) des Inkrementrads (5) sind.

10. Optischer Inkrementgeber (1) nach Anspruch 9, **dadurch gekennzeichnet, daß** die Ausgangssignale der Lichtempfänger (10, 15) jeweils einem Schwellwertentscheider (65, 66) zugeführt sind, daß die durch den jeweiligen Schwellwertentscheider (65, 66) erzeugten Impulsfolgen einer Auswerteeinheit (70) zugeführt sind und daß in der Auswerteeinheit (70) in Abhängigkeit der zugeführten Impulsfolgen eine Ermittlung der Anzahl der von den Lichtempfängern (10, 15) detektierten Durchbrüche (25,...,29, 31) und der Drehrichtung erfolgt.

11. Optischer Inkrementgeber (1) nach einem der vorherigen Ansprüche, **dadurch gekennzeichnet, daß** das Inkrementrad (5) außerhalb des Bereichs der Durchbrüche (25,...,29, 31) aus lichtdurchlässigem Material und im Bereich der Durchbrüche (25,...,29, 31) aus lichtundurchlässigem Material hergestellt ist.

## Claims

1. Optical incremental sensor (1) having an increment wheel (5) and optoreceivers (10, 15) which output phase-shifted signal pulses as a function of the direction of rotation upon actuation of the increment wheel (5), a light source (20), preferably a light-emitting diode, being provided inside the increment wheel (5), the outer wall of the increment wheel (5) having a single row of cutouts (25, ..., 29, 31), spaced apart in the direction of rotation of the increment wheel (5), for detecting a rotary movement, through which the light of the light source (20) exits, two optoreceivers (10, 15), preferably photodiodes, being arranged in the immediate vicinity of the increment wheel (5) such that they can be fed light in each case via at most one of the cutouts (25, ..., 29, 31), and that they do not simultaneously detect a brightness maximum in the light of the light source (20) fed to them via the cutouts (25, ..., 29, 31).

2. Optical incremental sensor (1) according to Claim 1, **characterized in that** the increment wheel (5) is situated on a switch-plate (35) and guided in a housing cap (40).

3. Optical incremental sensor (1) according to Claim 2, **characterized in that** the cutouts (25, ..., 29, 31) are arranged in a part, covered by the housing cap (40), of the outer wall of the increment wheel (5).

4. Optical incremental sensor (1) according to Claim 1, 2 or 3, **characterized in that** the optoreceivers (10, 15) are aligned with the centre of the light source (20) and have a short response time.

5. Optical incremental sensor (1) according to one of the preceding claims, **characterized in that** the dimensions of the cutouts (25, ..., 29, 31) are substantially identical in the respective direction of rotation of the increment wheel (5).

6. Optical incremental sensor (1) according to one of the preceding claims, **characterized in that** the dimensions of the spacings (30) between the individual cutouts (25, ..., 29, 31) are substantially identical.

7. Optical incremental sensor (1) according to one of Claims 2 to 6, **characterized in that** the optoreceivers (10, 15) are arranged in respectively one slot (45, 50) of the housing cap (40) which can be fed light essentially only via the cutouts (25, ..., 29, 31) in the increment wheel (5).

8. Optical incremental sensor (1) according to one of Claims 2 to 7, **characterized in that** the increment wheel (5) has on its outer wall a toothed rim (55) into which a retainer (60) arranged in the housing cap (40) can latch.

9. Optical incremental sensor (1) according to Claim 7 or 8, **characterized in that** the optoreceivers (10, 15) supply electrical signals which are proportional to the brightness profile as a function of the coverage of the respective slot (45, 50) by a cutout (25, ..., 29, 31) in the increment wheel (5).

10. Optical incremental sensor (1) according to Claim 9, **characterized in that** the output signals of the optoreceivers (10, 15) are fed in each case to a threshold-value decision circuit (65, 66), **in that** the pulse sequences produced by the respective threshold-value decision circuits (65, 66) are,fed to an evaluation unit (70), and **in that** the number of the cutouts (25, ..., 29, 31) detected by the optoreceivers (10, 15), and the direction of rotation are determined in the evaluation unit (70) as a function of the pulse sequences fed.

11. Optical incremental sensor (1) according to one of the preceding claims, **characterized in that** the increment wheel (5) is produced from transparent material outwith the region of the cutouts (25, ..., 29, 31), and from opaque material in the region of the cutouts (25, ..., 29, 31).

## Revendications

1. Emetteur incrémental optique (1) comprenant une roue incrémentale (5) et des récepteurs de lumière (10, 15) qui émettent des impulsions de signaux décalées en phase en fonction du sens de rotation lors de l'actionnement de la roue incrémentale (5), dans lequel, à l'intérieur de la roue incrémentale (5), est prévue une source lumineuse (20), de préférence une diode électroluminescente, la paroi extérieure de la roue incrémentale (5) présente une unique série d'ajours (25,.... 29, 31) espacés dans la direction de la rotation de la roue incrémentale (5), destinés à la détection d'un mouvement de rotation, et à travers lesquels la lumière de la source lumineuse (20) sort, deux récepteurs de lumière (10, 15), de préférence des photodiodes, sont disposés à proximité immédiate de la roue incrémentale (5) de manière que de la lumière puisse leur être amenée, à chaque fois par l'intermédiaire d'au maximum un des ajours (25,..., 29, 31) et qu'elles ne détectent pas simultanément un maximum de lumière de la source lumineuse (20) qui leur est amenée par l'intermédiaire des ajours (25,..., 29, 31).

2. Emetteur incrémental optique (1) selon la revendication 1,
**caractérisé en ce que**
la roue incrémentale (5) prend appui sur un plateau de commutateurs (35) et est guidée dans un couvercle du boîtier (40).

3. Emetteur incrémental optique (1) selon la revendication 2,
**caractérisé en ce que**
les ajours (25,..., 29, 31) sont disposés dans une partie de la paroi extérieure de la roue incrémentale (5) qui est recouverte par le couvercle du boîtier (40).

4. Emetteur incrémental optique (1) selon la revendication 1, 2 ou 3
**caractérisé en ce que**
les récepteurs de lumière (10, 15) sont pointés vers le centre de la source lumineuse (20) et présentent un court temps de réponse.

5. Emetteur incrémental optique (1) selon une des revendications précédentes
**caractérisé en ce que**
les dimensions des ajours (25,..., 29, 31) dans la direction de la rotation de la roue incrémentale (5) sont sensiblement égales.

6. Emetteur incrémental optique (1) selon une des revendications précédentes
**caractérisé en ce que**
les dimensions des espacements (30) entre les différents ajours (25,..., 29, 31) sont sensiblement égales.

7. Emetteur incrémental optique (1) selon une des revendications 2 à 6,
**caractérisé en ce que**
les récepteurs de lumière (10, 15) sont disposés chacun dans une fente (45, 50) du couvercle du boîtier (40), à laquelle de la lumière peut être transmise sensiblement uniquement par l'intermédiaire des ajours (25,..., 29, 31) de la roue incrémentale (5).

8. Emetteur incrémental optique (1) selon une des revendications 2 à 7,
**caractérisé en ce que**
la roue incrémentale (5) présente, le long de sa paroi extérieure, une couronne dentée (55) dans laquelle peut s'encliqueter un cliquet à ressort (60) disposé dans le couvercle de boîtier (40).

9. Emetteur incrémental optique (1) selon la revendication 7 ou 8,
**caractérisé en ce que**
les récepteurs de lumière (10, 15) délivrent des signaux électriques qui sont proportionnels à la variation de la luminosité en fonction du recouvrement de la fente (45, 50) concernée par un ajour (25,..., 29, 31) de la roue incrémentale (5) .

10. Emetteur incrémental optique (1) selon la revendication 9,
**caractérisé en ce que**
les signaux de sortie des récepteurs de lumière (10, 15) sont transmis chacun à un organe de décision de valeur de seuil (65, 66), de sorte que les suites d'impulsions produites par l'organe de décision de valeur de seuil (65, 66) concerné sont envoyées à une unité d'analyse (70) et **en ce que**, dans l'unité d'analyse (70) il se produit en fonction des suites d'impulsion acheminées un calcul du nombre des ajours (25,..., 29, 31) détectés par les récepteurs de lumière (10, 15) ainsi que du sens de rotation.

11. Emetteur incrémental optique (1) selon une des revendications précédentes,
**caractérisé en ce que**
la roue incrémentale (5) est fabriquée en une matière transparente en dehors de la région des ajours (25,..., 29, 31) et en une matière opaque dans la région des ajours (25,..., 29, 31).
